(19) Europäisches Patentamt
European Patent Office
Office européen des brevets

(11) Publication number: 0 009 871
A1

# (12) EUROPEAN PATENT APPLICATION

(21) Application number: 79301714.6

(22) Date of filing: 21.08.79

(51) Int. Cl.[3]: C 07 F 9/18
A 01 N 57/14

(30) Priority: 21.08.78 JP 100960/78
27.11.78 JP 146254/78

(43) Date of publication of application:
16.04.80 Bulletin 80/8

(84) Designated Contracting States:
CH DE FR GB IT

(71) Applicant: KUMIAI CHEMICAL INDUSTRY CO., LTD.
No. 4-26, Ikenohata 1-chome Taito-ku
Tokyo(JP)

(72) Inventor: Ogawa, Haruki
6-2 Otowacyo 4-chome
Fujieda City, Shizuoka(JP)

(72) Inventor: Shimazu, Tomonari
1809 Kikugawacho Kamo
Ogasa District, Shizuoka(JP)

(72) Inventor: Koyasu, Hideo
1809 Kikugawacho Kamo
Ogasa District, Shizuoka(JP)

(72) Inventor: Fujimori, Kumihiko
88-27 Kitawaki
Shimizu City, Shizuoka(JP)

(72) Inventor: Chiyomaru, Isao
2-94 Funabara
Shimizu City, Shizuoka(JP)

(72) Inventor: Sugiyama, Hironari
166-20 Kitawaki
Shimizu City, Shizuoka(JP)

(74) Representative: Roberts, Peter William et al,
Marks & Clerk Alpha Tower A.T. Centre
Birmingham B1 1TT(GB)

**(54) Organic phosphoric acid ester derivatives, a process for preparing the same and fungicidal, insecticidal or miticidal compositions containing the same.**

(57) Organic phosphoric acid ester derivatives represented by the formula (I):

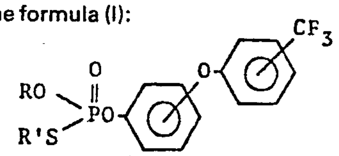

(1)

(R and R' being the same or different alkyl groups) have fungicidal, insecticidal and miticidal activity. Derivatives (I) can be prepared by reacting an 0-alkyl-S-alkyl thiophosphoric halide with a trifluoromethylphenoxyphenol and may be formulated in to compositions for use in controlling fungi, insects or mites.

EP 0 009 871 A1

0009871

# ORGANIC PHOSPHORIC ACID ESTER DERIVATIVES, A PROCESS FOR PREPARING THE SAME AND FUNGICIDAL, INSECTICIDAL OR MITICIDAL COMPOSITIONS CONTAINING THE SAME

## BACKGROUND OF THE INVENTION

### 1. Field of the Invention

This invention relates to an organic phosphoric acid ester derivative, to a process for preparing the same, and to a fungicidal, insecticidal or miticidal composition containing the same as an active ingredient.

### 2. Description of the Prior Art

Japanese Patent Application (OPI) No. 13537/1975 (The term "OPI" as used herein refers to a "published unexamined Japanese patent application") discloses that compounds represented by the formula:

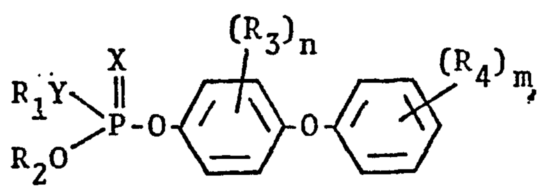

wherein $R_1$ represents an alkyl group having 1 to 7 carbon atoms; $R_2$ represents a methyl or ethyl group; $R_3$ and $R_4$ each represents a hydrogen atom, a nitro group or a halogen atom; m represents an integer of 1 to 5; n represents an integer of 1 to 4; and X and Y each represents an oxygen or sulfur atom, are effective for controlling insect pests such as rice stem borer (Chilo suppressalis), ticks and the like.

0009871

U.S. Patent 3,833,691 discloses that compounds represented by the formula:

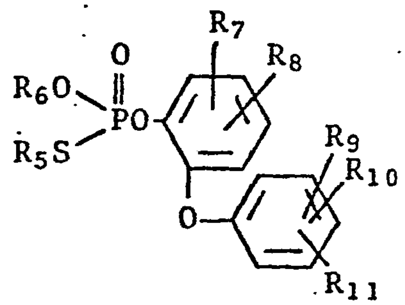

wherein $R_5$ represents an alkyl group having 1 to 4 carbon atoms; $R_6$ represents a methyl or ethyl group; $R_7$, $R_8$, $R_9$ and $R_{10}$ each represents a hydrogen atom, a chlorine atom or a bromine atom; and $R_{11}$ represents a hydrogen atom, a chlorine atom or a nitro group, are effective to control insect pests such as Aphids, two spotted spider mite (Tetranychus urticae) and so on.

Further, German Patent Application (OLS) No. 2,439,663 discloses that compounds represented by the formula:

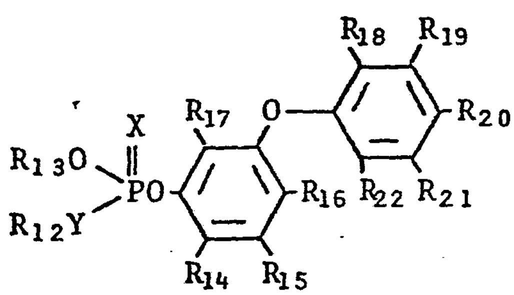

wherein $R_{12}$ represents an alkyl group having 1 to 7 carbon atoms; $R_{13}$ represents a methyl or ethyl group; $R_{14}$, $R_{15}$, $R_{16}$, $R_{17}$, $R_{18}$, $R_{19}$, $R_{20}$, $R_{21}$ and $R_{22}$ each represents a hydrogen

atom or a halogen atom; and X and Y each represents an oxygen or sulfur atom, are useful as insecticides and miticides.

The compounds according to the present invention are markedly superior to these prior art compounds in terms of their ability to control insect pests, mites and unhygienic insects.

SUMMARY OF THE INVENTION

One object of the present invention is to provide organic phosphoric acid ester derivatives which have excellent fungicidal, insecticidal, miticidal activities.

A further object of the present invention is to provide a process for preparing the organic phosphoric acid ester derivatives.

Still a further object of the present invention is to provide an effective fungicidal, insecticidal or miticidal composition.

According to one embodiment of this invention an organic phosphoric acid ester derivative represented by the formula (I):

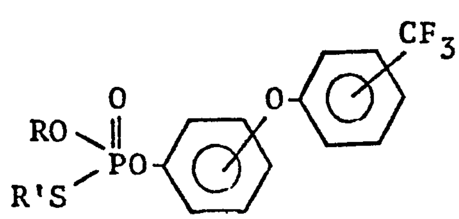

(I)

wherein R and R', which may be the same or different, each represents an alkyl group, is provided.

In another embodiment, this invention provides a process for preparing organic phosphoric acid ester derivatives of the formula (I) above which comprises reacting an O-alkyl-S-alkyl thiophosphoric halide represented by the formula (II):

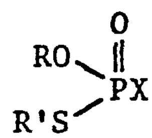

(II)

wherein X represents a halogen atom and R and R' are as defined above, with a trifluoromethylphenoxyphenol represented by the formula (III):

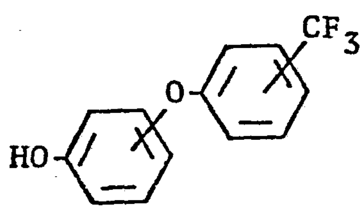

(III)

In an even further embodiment, this invention provides a fungicidal, insecticidal or miticidal composition comprising an effective amount of at least one compound of the above formula (I) and one or more agriculturally acceptable adjuvants.

DETAILED DESCRIPTION OF THE INVENTION

Various organic phosphorus compounds have been synthesized and intensive physiological tests have been performed as a result of which it has been found that the

compounds of the formula (I) exhibit a high ability to control various fungi, insect pests, mites and unhygienic insects harmful to agricultural and horticultural crops.

In formula (I) the alkyl group represented by R and R' includes straight chain and branched chain alkyl groups having 1 to 5 carbon atoms, for example, a methyl group, an ethyl group, an n-propyl group, an isopropyl group, an n-butyl group, a sec-butyl group, a pentyl group, etc.

The alkyl group represented by R is preferably a methyl group or an ethyl group, and more preferably an ethyl group.

The alkyl group represented by R' is preferably an n-propyl group or a sec-butyl group.

The trifluoromethylphenoxy group may be attached to the benzene ring of the phenylthiophosphate moiety at any one of o-, m- and p-positions, with the p-position being preferred. The substitution of the trifluoromethyl group may be at m- or p-position, with the p-position being preferred.

Insect pests and mites which can be effectively controlled by the compounds of this invention include:

Unhygienic Insects: House flies (Musca domestica vicina)
Mosquitoes (Anophiles sinensis), (Culex pipiens pallens)
American cockroach (Peripraneta americana)
German cockroach (Blatteila germanica)

| | |
|---|---|
| Insect Pests in Paddy Fields (low land field): | Rice stem borer (Chilo suppressalis) |
| | Rice stink bug (Lagymotomus elongatus) |
| | Rice leaf beetle (Oulema oryzae) |
| | Rice leaf miner (Agtomyzae oryzae) |
| | Grass leaf roller (Cnaphalocrocis medinalis) |
| | Rice plant skipper (Parnara guttata) |
| | Rice water weevil (Lissorhoptrus oryzophilus) |
| | Rice plant weevil (Echinocnemus squameus) |
| Insect Pests in Upland Farms: | Tobacco cutworm (Spodoptera litura) |
| | cabbage armyworm (Mamestra brassicae) |
| | Diamondback moth (Plutella xylostella) |
| | Green peach aphid (Myzuspersicae sulzer) |
| | Spiraea aphid (Aphis spriaeco patch) |
| | Common cabbage worm (Pierisrapae crucivora) |
| | Common cut worm (Agrotis fucosa) |
| | Black cut worm (Agrotis ipsilon) |
| Insect Pests on Garden Trees: | Blue leaf beetle (Linacidea aenea) |
| | Scales, Aphids |
| Insect Pests on Fruit Trees: | Smaller tea tortrix (Adoxophyes orana) |
| | Apple leaf miner (Lithocolletis ringoniella) |
| | Comstock mealybug (Pseudococcus comstocki) |

| | |
|---|---|
| | Mulberry pyralid (Margaronia pyloalis) |
| | Arrow head scale (Unaspis yanonensis) |
| | White peach scale (Pseudavlacaspis pentagona) |
| Insect Pests on Tea Trees: | Tea tortrix (Homona magnaima) |
| | Tea leaf roller (Caloptilia theivora) |
| | Smaller tea tortrix (Adoxophyes orana) |
| Mites: | Carmine mite (Tetranychus cinnabarius) |
| | Two spotted spider mite (Tetranychus urticae) |
| | Citrus red mite (Panonychus citri) |
| | Blub mite (Rhizoglyphus echinopus) |

Among organic phosphorus compounds of this type, the compounds of the present invention exhibit a high ability to control insect pests and specifically the fungi, insect pests, mites and unhygienic insects listed above. As the above list indicates the compounds of the present invention are effective against quite a wide variety of insects, mites, etc. Because of this broad insecticidal activity, various pest insects can simultaneously be controlled with each crop treatment, thus reducing the overall costs of protecting the crop. For instance, apple leaf miner, leaf rollers, peach fruit moth, and oriental moth (Cnidocampa flavescens) on apple trees; tobacco cutworm, cabbage armyworm, diamondback moth, cucurbit leaf beetle (Aulacophora femoralis), aphids, and Tetranychidae

on vegetables; or leaf rollers, tea leaf miner (Gracilaria theivora), (Tetranychus kanzawai), and white peach scale (Pseudaulacapsis pentagona) on tea plants can be controlled at one time.

The compounds of this invention exhibit especially superior effects against rice water weevil which has recently bred in paddy fields and which has been a problem to control for some commercially available chemicals.

In general, it is comparatively diffucult to control those insect pests which have many number of generation or long breeding seasons and those insect pests which are parasitic to crops. Generally, this means application of chemicals must be performed many times and in the case of crops this must be done without damaging the crop or making the crop unfit for consumption. The compounds of this invention have extremely long-lasting effects, particularly against rice stem borer and rice water weevil, they are quite effective at controlling these insect pests with a minimum of applications. Furthermore, because the compounds of this invention are not phytotoxic to plants and are of low toxicity to mammals, they can safely be applied to agricultural and horticultural crops such as rice; vegetables, e.g., cabbage, raddish, Chinese cabbage, egg plant, green pepper, tomato, cucumber; beans, e.g., soybeans, kidney beans, adzuki beans, peas; tea leaves; cotton plant; fruit trees, e.g., apple, citrus fruits, pears,

kaki (Japanese persimmon), peach, grapes; beet; potato, sweet potato, taro; and the like.

The compounds of this invention are also effective for controlling various fungi, e.g., Piricularia oryzae, Pellicularia sasaki, etc. They are especially effective against Piricularia oryzae.

Some specific examples of the compounds of this invention are illustrated in Table 1 below but as a matter of course this invention is not to be construed as being limited to these compounds alone.

TABLE 1

Organic Phosphorus Ester Derivatives

| Compound No. | Chemical Formula | Physical Property |
|---|---|---|
| 1 | 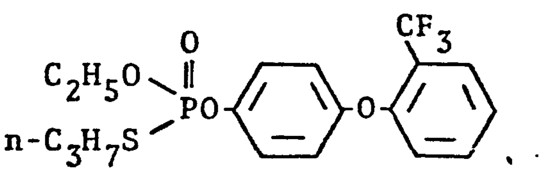 | pale yellow transparent liquid b.p. 173-177°C/ 0.008 mmHg $n_D^{20}$ 1.5181 |
| 2 | 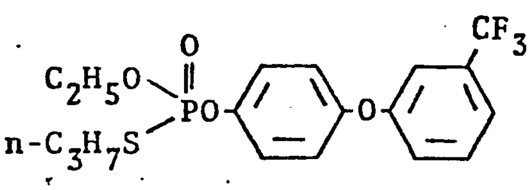 | colorless transparent liquid b.p. 168-170°C/ 0.015 mmHg $n_D^{20}$ 1.5148 |
| 3 | 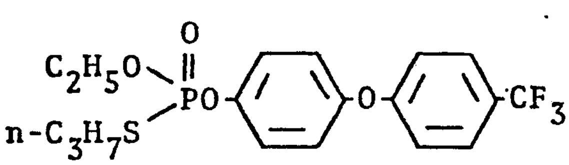 | yellow transparent liquid b.p. 160-165°C/ 0.01 mmHg $n_D^{20}$ 1.5190 |

(cont'd)

| Compound No. | Chemical Formula | Physical Property |
|---|---|---|
| 4 | 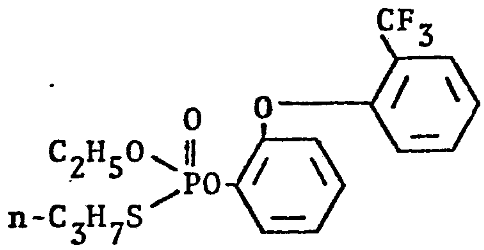 | colorless transparent liquid b.p. 155-160°C/ 0.015 mmHg $n_D^{20}$ 1.5170 |
| 5 | 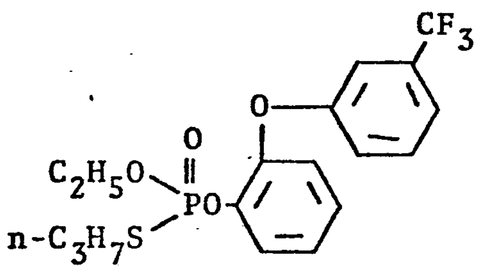 | colorless transparent liquid b.p. 153-155°C/ 0.015 mmHg $n_D^{20}$ 1.5130 |
| 6 | 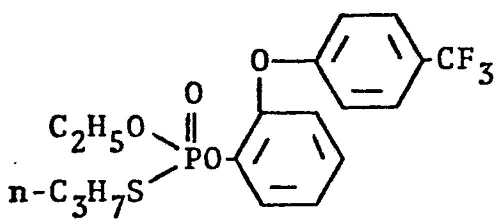 | colorless transparent liquid b.p. 143-144°C/ 0.01 mmHg $n_D^{20}$ 1.5119 |
| 7 | 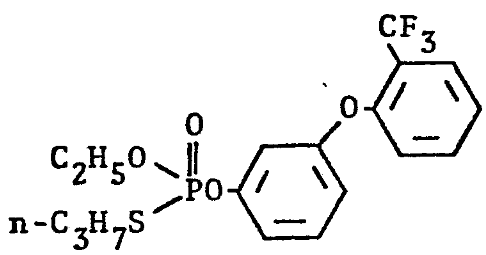 | yellow transparent liquid b.p. 170-174°C/ 0.015 mmHg $n_D^{20}$ 1.5131 |
| 8 | 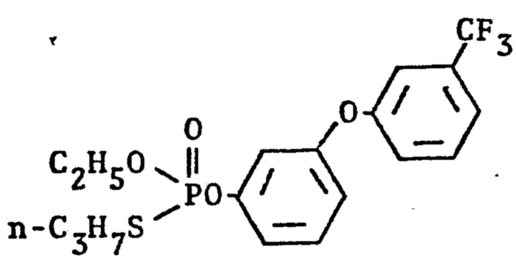 | colorless transparent liquid b.p. 162-164°C/ 0.012 mmHg $n_D^{20}$ 1.5157 |
| 9 | 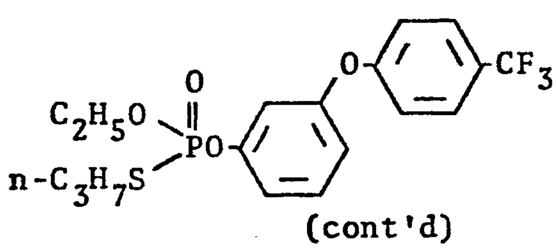 | pale yellow transparent liquid b.p. 165-170°C/ 0.01 mmHg $n_D^{20}$ 1.5167 |

(cont'd)

| Compound No. | Chemical Formula | Physical Property |
|---|---|---|
| 10 | 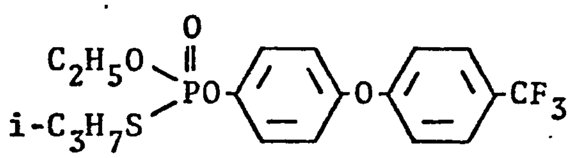 | yellow liquid<br>b.p. above 110°C/ 0.09 mmHg<br>$n_D^{20}$ 1.5155 |
| 11 | 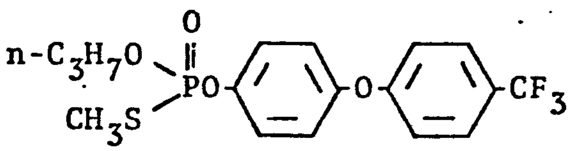 | pale yellow liquid<br>b.p. 195-196°C/ 0.02 mmHg<br>$n_D^{20}$ 1.5215 |
| 12 | 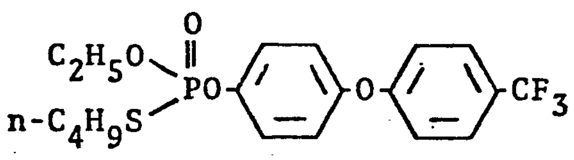 | pale yellow transparent viscous liquid<br>b.p. 170-175°C/ 0.02 mmHg<br>$n_D^{20}$ 1.5162 |
| 13 | 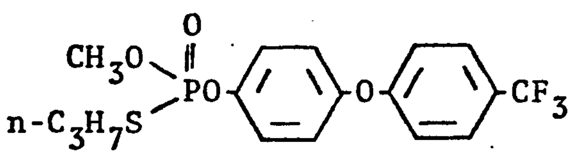 | pale brown liquid<br>b.p. above 190°C/ 0.02 mmHg<br>$n_D^{20}$ 1.5253 |
| 14 | 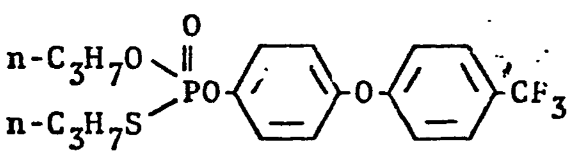 | pale brown liquid<br>b.p. 167-168°C/ 0.01 mmHg<br>$n_D^{20}$ 1.5169 |
| 15 | 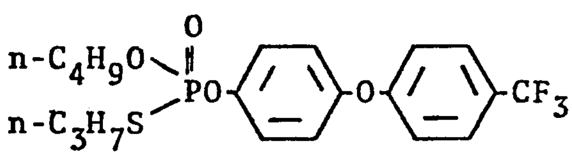 | pale brown liquid<br>b.p. 176°C/0.01 mmHg<br>$n_D^{20}$ 1.5132 |
| 16 | 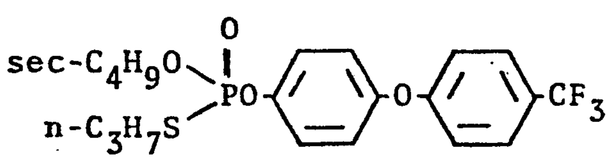 | reddish brown liquid<br>b.p. above 200°C/ 0.01 mmHg<br>$n_D^{20}$ 1.5152 |

(cont'd)

| Compound No. | Chemical Formula | Physical Property |
| --- | --- | --- |
| 17 | 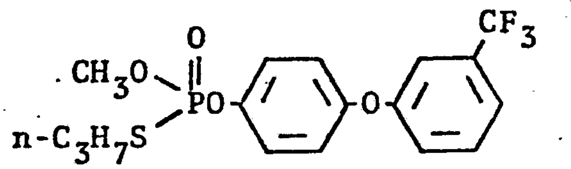 | brown liquid<br>b.p. 163°C/<br>0.02 mmHg<br>$n_D^{20}$ 1.5237 |
| 18 | 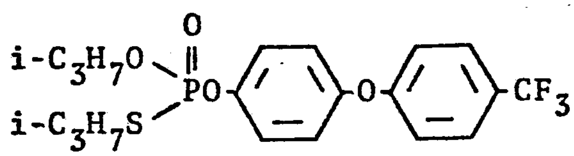 | reddish brown liquid<br>b.p. above 200°C/<br>0.02 mmHg<br>$n_D^{20}$ 1.5156 |
| 19 | 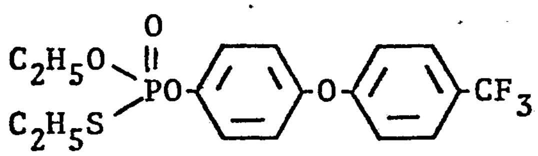 | pale brown liquid<br>b.p. 163-164°C/<br>0.02 mmHg<br>$n_D^{20}$ 1.5218 |
| 20 | 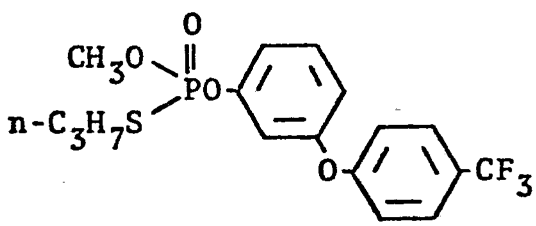 | colorless transparent liquid<br>b.p. 160-161°C/<br>0.01 mmHg<br>$n_D^{20}$ 1.5166 |
| 21 | 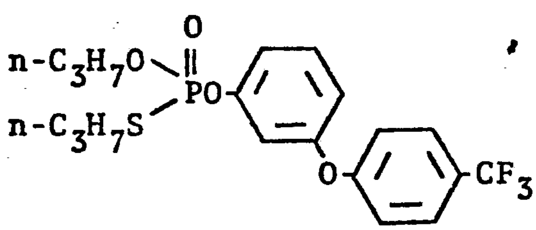 | colorless transparent liquid<br>b.p. 164-165°C/<br>0.01 mmHg<br>$n_D^{20}$ 1.5238 |
| 22 | 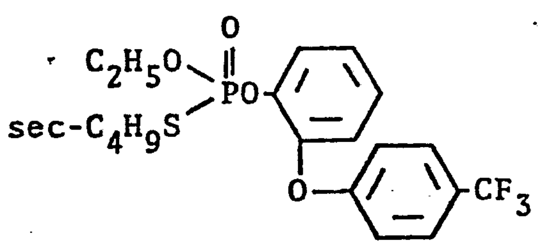 | pale yellow transparent liquid<br>b.p. 160-161°C/<br>0.02 mmHg<br>$n_D^{20}$ 1.5122 |
| 23 | 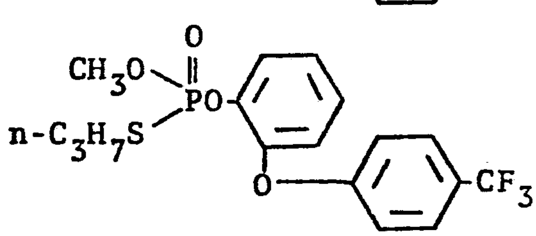 | pale yellow transpatent liquid<br>b.p. 158-160°C/<br>0.015 mmHg<br>$n_D^{20}$ 1.5240 |

(cont'd)

| Compound No. | Chemical Formula | Physical Property |
|---|---|---|
| 14 | 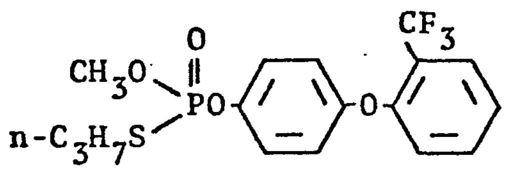 | pale yellow transparent liquid b.p. 165-167°C/ 0.01 mmHg $n_D^{20}$ 1.5262 |

The compounds according to the present invention are novel compounds which are not specifically disclosed in any of the above-described publications. Still, the compounds of the present invention are far superior to those compounds specifically disclosed in the publications in controlling fungi, insect pests, mites, unhygienic insects and rice blast (Piricularia oryzae). Of the compounds of this invention represented by the formula (I), those in which R represents an ethyl group and R' represents an n-propyl group or a sec-butyl group are particularly preferred since they exhibit long-lasting fungicidal, insecticidal and miticidal activities, they have low toxicity to fish and they are especially effective for controlling insects of the order Lepidoptera.

The compounds of the present invention can be prepared by reacting an O-alkyl-S-alkyl thiophosphoric halide of the formula (II) with trifluoromethylphenoxyphenol of the formula (III). The reaction is preferably carried out using an acid acceptor such as tertiary amines, e.g., trialkylamines (triethylamine, etc.), pyridine, dialkylanilines (diethylaniline, etc.), etc.; inorganic bases, e.g., hydrides,

hydroxides, carbonates and bicarbonates of alkali metals or alkaline earth metals, for example, sodium hydride, sodium hydroxide, potassium hydroxide, sodium carbonate, potassium carbonate, sodium bicarbonate, potassium bicarbonate, etc.; and the like. The reaction proceeds advantageously using about 1 to 1.2 mols of the compounds of the formula (III) and about 1 to 1.2 mols of the acid acceptor per mol of the compounds of the formula (II).

Solvents which can be used in this reaction include ethers such as diethyl ether, dipropyl ether, dioxane, tetrahydrofuran, etc., amides such as N,N-dialkylcarboxamides (e.g., N,N-dimethylcarboxamide, etc.), etc., aliphatic, aromatic or halogenated hydrocarbons such as benzene, toluene, xylene, chloroform, chlorobenzene, etc., nitriles such as acetonitrile, dimethyl sulfoxide, ketones such as acetone, methyl ethyl ketone, etc., alcohols such as methanol, ethanol, etc., and water.

The reaction temperature ranges from about -10° to about 50°C, preferably 5 to 45°C, in the case of using a tertiary amine as acid acceptor, or from about -10°C to about 150°C, preferably 30 to 120°C, in the case of using an inorganic base as acid acceptor.

The reaction is performed under these reaction conditions for a period of about 1 to about 20 hours, preferably 1 to 5 hours, to obtain the desired compounds in high yields.

The following Synthesis Examples are provided to illustrate the preparation of some typical compounds of this invention, but they are not to be construed as limiting the present invention. Unless otherwise indicated, all parts, percents, ratios and the like are by weight.

SYNTHESIS EXAMPLE 1

Preparation of Compound No. 3

5.1 g (0.02 mol) of O-ethyl-S-n-propyl thiophosphoric chloride was slowly added dropwise to a mixture of 6.4 g (0.025 mol) of 4-(4-trifluoromethylphenoxy)phenol, 3.5 g (0.025 mol) of potassium carbonate and 35 mℓ of methyl ethyl ketone while maintaining the mixture at 40 to 50°C, followed by heat-refluxing for 3 hours. After completion of the reaction, the reaction mixture was cooled and filtered to remove the inorganic salt. The methyl ethyl ketone was distilled off, and the residue was evaporated to obtain 9.1 g of O-ethyl-S-n-propyl-O-4-(4-trifluoromethylphenoxy)phenyl phosphorothiolate in a yield of 86.2%.

Melting Point: 160-165°C/0.01 mmHg

Refractive Index: $n_D^{20}$ 1.5190

In the same manner as described above, Compound Nos. 1 and 2 were prepared.

SYNTHESIS EXAMPLE 2

Preparation of Compound No. 3

12.5 g (0.06 mol) of O-ethyl-S-n-propyl thiophosphoric chloride was slowly added dropwise to a mixture of

15.3 g (0.06 mol) of 4-(4-trifluoromethylphenoxy)phenol, 6.1 g (0.06 mol) of triethylamine and 100 mℓ of benzene while stirring. Stirring was further continued at 60°C to 70°C for 2 hours. After completion of the reaction, the precipitated salt was separated by filtration, and the benzene was distilled off. The residue was evaporated to obtain 20.7 g of O-ethyl-S-n-propyl-O-4-(4-trifluoromethylphenoxy)phenylphosphorothiolate in a yield of 82.1%.

SYNTHESIS EXAMPLE 3

Preparation of Compound Nos. 4

12.5 g (0.06 mol) of O-ethyl-S-n-propyl thiophosphoric chloride was slowly added dropwise to a mixture of 15.3 g (0.06 mol) of 2-(2-trifluoromethylphenoxy)phenol, 6.1 g (0.06 mol) of triethylamine and 100 mℓ of benzene while stirring. After completion of the addition, the mixture was stirred at 60 to 70°C for 2 hours, followed by cooling. The precipitated salt was separated by filtration, the benzene was distilled off, and the residue evaporated to obtain 20.7 g of O-ethyl-S-n-propyl-O-2-(2-trifluoromethylphenoxy)phenyl phosphorothiolate in a yield of 82.1%.

In the same manner as described above, Compounds Nos. 5 and 6 were prepared.

SYNTHESIS EXAMPLE 4

Preparation of Compound No. 9

4.1 g (0.02 mol) of O-ethyl-S-n-propyl thiophosphoric chloride was slowly added dropwise to a mixture of 5.1 g (0.02

mol) of 3-(4-trifluoromethylphenoxy)phenol, 1.6 g (0.02 mol) of pyridine and 60 mℓ of benzene while stirring, followed by heat-refluxing for 3 hours. After completion of the reaction, the reaction mixture was cooled, and the precipitated salt was separated by filtration. The benzene was distilled off, and the residue was evaporated to obtain 7.7 g of O-ethyl-S-n-propyl-O-3-(3-trifluoromethylphenoxy)phenyl phosphorothiolate in a yield of 91.5%.

In the same manner as described above, Compound Nos. 7 and 8 were prepared.

SYNTHESIS EXAMPLE 5

Preparation of Compound No. 13

4.8 g (0.025 mol) of O-methyl-S-n-propyl thiophosphoric chloride was slowly added dropwise to a mixture of 6.4 g (0.025 mol) of 4-(4-trifluoromethylphenoxy)phenol, 3.5 g (0.025 mol) of potassium carbonate and 35 mℓ of methyl ethyl ketone while maintaining the mixture at 40 to 50°C, followed by heat-refluxing for 3 hours. After cooling, the inorganic salt precipitated was separated by filtration. The methyl ethyl ketone was distilled off, and the residue was evaporated to obtain 8.7 g of O-methyl-S-n-propyl-O-4-(4-trifluoromethylphenoxy)phenyl phosphorothiolate in a yield of 85.1%.

Boiling Point: above 190°C/0.02 mmHg

Refractive Index: $n_D^{20}$ 1.5253

In the same manner as described above, Compound Nos. 10, 11, 12, 14, 15, 16, 17, 18 and 19 were prepared.

SYNTHESIS EXAMPLE 6

Preparation of Compound No. 21

4.7 g (0.02 mol) of O-n-propyl-S-n-propyl thiophosphoric chloride was slowly added dropwise to a mixture of 5.1 g (0.02 mol) of 3-(4-trifluoromethylphenoxy)phenol, 1.6 g (0.02 mol) of pyridine and 60 mℓ of benzene while stirring, followed by heat-refluxing for 3 hours. After completion of the reaction, the reaction mixture was cooled, and the precipitated salt was separated by filtration. The benzene was distilled off, and the residue was evaporated to obtain 7.7 g of O-n-propyl-S-n-propyl-O-3-(3-trifluoromethylphenoxy)-phenyl phosphorothiolate in a yield of 88.4%.

Boiling Point: 164-165°C/0.01 mmHg

Refractive Index: $n_D^{20}$ 1.5238

In the same manner as described above, Compound No. 20 was prepared.

SYNTHESIS EXAMPLE 7

Preparation of Compound No. 22

12.5 g (0.06 mol) of O-ethyl-S-sec-butyl thiophosphoric chloride was slowly added dropwise to a mixture of 15.3 g (0.06 mol) of 2-(2-trifluoromethylphenoxy)phenol, 6.1 g (0.06 mol) of triethylamine and 100 mℓ of benzene while stirring. After the addition, the stirring was further continued for 2 hours at 60 to 70°C. After completion of the reaction, the reaction mixture was cooled, and the precipitated salt was

separated by filtration. The benzene was evaporated, and the residue was evaporated to obtain 22.7 g of O-ethyl-S-sec-butyl-O-2-(2-trifluoromethylphenoxy)phenyl phosphorothiolate in a yield of 84.1%.

In the same manner as described above, Compound Nos. 23 and 24 were prepared.

The compounds of the present invention can be applied broadly to upland farms, paddy fields (low land farms), orchards, forests and various non-agricultural lands by suitably selecting the application procedure, the amount of the compound to be used and the like.

A suitable amount of the compound to be applied varies depending upon various factors such as the climatic conditions, the soil conditions, the form of the chemical, the time of application, the method of application, or the types of cultivated crops to which it is applied and the diseases or the insects to be controlled.

When the compounds of this invention are used as a fungicidal, insecticidal or miticidal composition, the compounds can be formulated into various forms such as an emulsifiable concentrate, a wettable powder, a dust, granules, fine granules and other generally employed agricultural preparations by optionally incorporating conventional agriculturally acceptable adjuvants, for example, a carrier such as clay, talc, bentonite, diatomaceous earth or white carbon,

solvents such as xylene, toluene, methyl ethyl ketone, isopropanol or dimethyl naphthalene, or a surface active agent such as an alkylbenzenesulfonic acid metal salt, e.g., sodium dodecylbenzenesulfonate, a polyoxyethylene alkylaryl ether, e.g., a polyoxyethylene alkylphenyl ether, a sodium alkylsulfate, a sodium alkylnaphthalenesulfonate, or sodium lignin sulfonate. A suitable ratio of the compounds of this invention to the adjuvant(s) ranges from 0.5:99.5 to 90:10, preferably 1:99 to 70:30 by weight.

The fungicidal, insecticidal or miticidal composition of this invention can also be mixed with other fungicides, insecticides and/or miticides to bring about improved effects.

The above-described preparations are applied to the soil or the stalks and leaves as they are or diluted at a rate of about 0.05 to about 20 kg/ha, preferably 0.15 to 10 kg/ha, more preferably 0.5 to 5 kg/ha, as active ingredient. In case where an emulsifiable concentrate or a wettable powder is used in foliar treatment, it is diluted to a concentration of about 50 to about 2,000 ppm, preferably 100 to 1,000 ppm, more preferably 250 to 500 ppm. In case of application from an airplane, further higher concentrations are employed. That is, a preparation such as an emulsifiable concentrate and the like is used as it is or diluted with a small amount of water, e.g., 0.5 to 1.5 kg of an emulsifiable concentrate is diluted with 20 to 50 liters of water to obtain a concentration of 10,000 to 75,000 ppm.

The present invention will further be explained more specifically by reference to the following formulation embodiments and examples but the invention is not to be construed as being limited thereto. Unless otherwise indicated, all parts, percents, ratios and the like are by weight.

(a) Wettable Powder:

5-90%, preferably 20-50%, of active ingredient, 1-20%, preferably 5-10%, of a solid surface active agent and 5-85%, preferably 40-70%, of a solid carrier are crushed and mixed well.

(b) Emulsifiable Concentrate:

5-90%, preferably 20-70%, of active ingredient is dissolved in 5-90%, preferably 30-60%, of a liquid carrier, and 1-40%, preferably 5-20%, of an emulsifying agent is added thereto.

(c) Dust:

0.5-10%, preferably 1-5%, of active ingredient is crushed together with 90-99.5%, preferably 95-99%, of a finely crushed solid carrier.

(d) Granules or Fine Granules:

0.5-40%, preferably 2-10%, of active ingredient is sprayed on 60-99.5%, preferably 90-98%, of a solid carrier to adsorb, or the active ingredient is sprayed on a portion of the solid carrier and resulting granules are coated with the rest of the carrier.

FORMULATION EXAMPLE 1

Emulsifiable Concentrate

50 parts of Compound No. 1, 35 parts of xylene and 15 parts of a polyoxyethylene alkylphenyl ether were uniformly mixed to obtain an emulsifiable concentrate. Upon use, the emulsifiable concentrate was diluted with water.

FORMULATION EXAMPLE 2

Wettable Powder

20 parts of Compound No. 2, 35 parts of diatomaceous earth, 35 parts of clay, 5 parts of white carbon and 5 parts of a mixture of a polyoxyethylene alkylphenyl ether and sodium lignin sulfonate (1:3) were mixed and crushed to obtain a wettable powder. Upon use, it was suspended in water and sprayed.

FORMULATION EXAMPLE 3

Dust

3 parts of Compound No. 5, 47 parts of talc, 47 parts of clay and 3 parts of white carbon were mixed and crushed to obtain a powder. It was scattered as it was upon use.

FORMULATION EXAMPLE 4

Granules

5 parts of Compound No. 6, 15 parts of bentonite, 47.5 parts of talc, 30 parts of clay, 2 parts of sodium lignin sulfonate and 0.5 part of sodium dodecylbenzenesulfonate were uniformly mixed and crushed, and 25 parts of water was added

thereto. The blend was granulated using an extrusion granulator and then subjected to dry sieving. The granules are scattered as they are upon use.

FORMULATION EXAMPLE 5

Emulsifiable Concentrate

50 parts of Compound No. 4, 40 parts of xylene and 10 parts of Sorpol SNX (trade name produced by Toho Chemical Co., Ltd.) were uniformly mixed to form an emulsifiable concentrate. Upon use, the concentrate was diluted with water and scattered.

FORMULATION EXAMPLE 6

Wettable Powder

40 parts of Compound No. 3, 15 parts of diatomaceous earth, 15 parts of clay, 25 parts of white carbon and 5 parts of a mixture of a polyoxyethylene alkylphenyl ether and sodium lignin sulfonate (1:3) were mixed and crushed to obtain a wettable powder.

FORMULATION EXAMPLE 7

Wettable Powder

40 parts of Compound No. 12, 15 parts of diatomaceous earth, 15 parts of clay, 25 parts of white carbon and 5 parts of a mixture of a polyoxyethylene alkylphenyl ether and sodium lignin sulfonate (1:3) were mixed and crushed to obtain a wettable powder. Upon use, it was suspended in water and sprayed.

The effects of the compounds according to the present invention will be hereinafter illustrated by way of several test examples. The comparative compounds and the control chemicals which were used in these test examples are shown below:

| Comparative Compound No. | Chemical Formula | Reference |
|---|---|---|
| C-1 | 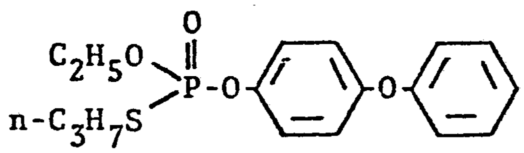 | Japanese Patent Application (OPI) No. 13537/ 1975 |
| C-2 | 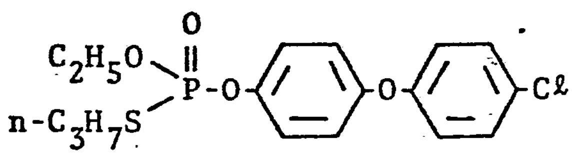 | " |
| C-3 | 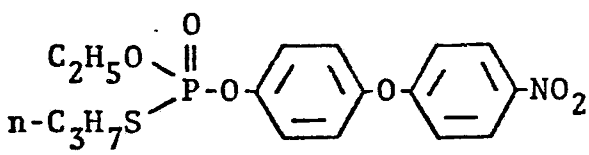 | " |
| C-4 | 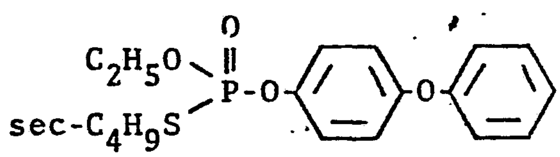 | " |
| C-5 | 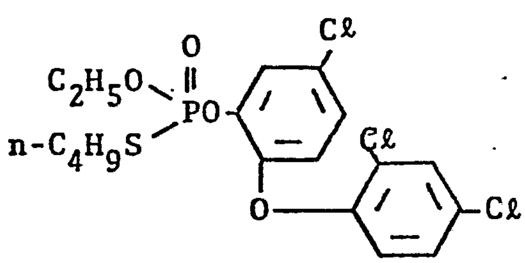 | U.S. Patent 3,833,691 |
| C-6 | 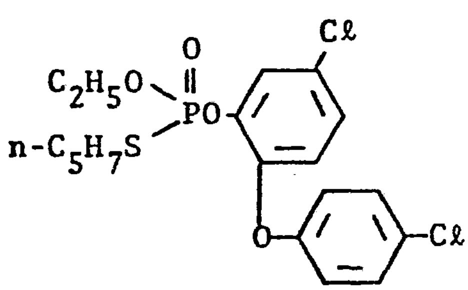 | U.S. Patent 3,833,691 |

| Comparative Compound No. | Chemical Formula | Reference |
|---|---|---|
| C-7 | 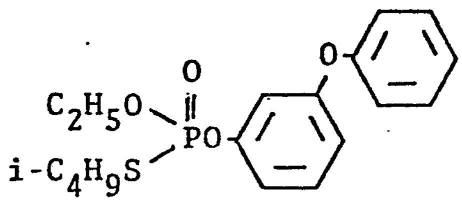 | German Patent Application (OLS) No. 2,439,663 |
| C-8 | 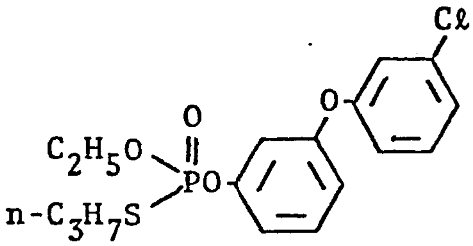 | " |
| Tokuthion | Trade name of O-2,4-dichlorophenyl-O'-ethyl-S-propyl dithiophosphate manufactured by Nippon Tokushu Noyaku Seizo K.K. | |
| Sumithion | Trade name of O,O'-dimethyl-(3-methyl-4-nitrophenyl)thiophosphate manufactured by Sumitomo Chemical Co., Ltd. | |
| Diazinon | Trade name of O,O'-diethyl-(2-isopropyl-4-methylpyrimidyl-6) thiophosphate manufactured by Nippon Kayaku Co., Ltd. | |
| Salithion | Trade name of 2-methoxy-4H-1,3,2-benzodioxaphosphorin-2-sulfide manufactured by Sumitomo Chemical Co., Ltd. | |
| Kelthane | Trade name of bis(chlorophenyl)trichloroethanol manufactured by Sankyo Company, Ltd. | |
| Morestan | Trade name of 6-methylquinoxalin-2,3-dithiocarbonate manufactured by Nippon Tokushu Noyaku Seizo K.K. | |

Rangard — Trade name of O,O-dimethyl-O-2-chloro-1-(2,4-dichlorophenyl) vinyl phosphate manufactured by Kumiai Chemical Industry Co., Ltd.

Padan — Trade name of 1,3-bis(carbamoylthio)-2-(N,N-dimethylamino)propane hydrochloride manufactured by Takeda Chemical Industries, Ltd.

## TEST EXAMPLE 1

### Insecticidal Effect on Rice Stem Borer

(1) Insecticidal effect on 3rd-instar larvae

A wettable powder prepared as described in Formulation Example 2 was diluted with water to a predetermined concentration. Rice seedlings were dipped into the dilute solution and placed in a 60 mℓ volume cup made of vinyl chloride resin, and 10 3rd-instar larvae of rice stem borer were put in each cup. The cups were capped and maintained at 25°C. After 72 hours, percent mortality was recorded, and the results obtained are shown in Table 2 below.

TABLE 2

| Effective Component (Compound No.) | Concentration (ppm) | Number of Insects Tested | Percent Mortality (%) |
|---|---|---|---|
| 1 | 20 | 60 | 100 |
| 1 | 10 | " | 100 |
| 1 | 5 | " | 82.1 |
| 1 | 2.5 | " | 56.6 |
| 1 | 1.3 | " | 41.2 |
| 2 | 20 | " | 100 |
| 3 | 20 | " | 100 |
| 3 | 10 | " | 100 |
| 3 | 5 | " | 83.1 |
| 3 | 2.5 | " | 60.5 |
| 3 | 1.3 | " | 44.4 |
| 4 | 20 | " | 100 |
| 5 | 20 | " | 100 |
| 6 | 20 | " | 100 |
| 7 | 20 | " | 100 |
| 8 | 20 | " | 100 |
| 9 | 20 | " | 100 |
| 9 | 10 | " | 100 |
| 9 | 5 | " | 86.1 |
| 9 | 2.5 | " | 64.6 |
| 9 | 1.3 | " | 47.5 |

(cont'd)

| Effective Component (Compound No.) | Concentration (ppm) | Number of Insects Tested | Percent Mortality (%) |
|---|---|---|---|
| C-1 | 20 | 60 | 40.6 |
| C-1 | 10 | " | 27.4 |
| C-2 | 20 | " | 36.4 |
| C-2 | 10 | " | 10.8 |
| C-3 | 20 | " | 25.4 |
| C-3 | 10 | " | 9.5 |
| Tokuthion | 5 | " | 63.2 |
| " | 2.5 | " | 48.4 |
| " | 1.3 | " | 34.3 |
| Control | -- | " | 0 |

(2) Prevention effect against rice stem borer

A wettable powder prepared as described in Formulation Example 2 was diluted with water to a predetermined concentration, and the dilute solution was sprayed on a rice plant of about 45 cm height grown in a flower pot at a rate of 30 mℓ per pot using a spray-gun. The pots were kept in a greenhouse, and the rice plants were infected with laboratory reared rice stem borer larvae 2, 6, 9 and 14 days after application. Four days after infectation, the number of boring larvae into rice plant and percent mortality was assessed. The results obtained are shown in Table 3 below.

TABLE 3

| Tested Effective Component (Compound No.) | Concentration (ppm) | Days after Application: 2 Days | | 6 Days | | 9 Days | | 14 Days | |
|---|---|---|---|---|---|---|---|---|---|
| | | Number of Tested Insects | Percent Mortality (%) | Number of Tested Insects | Percent Mortality (%) | Number of Tested Insects | Percent Mortality (%) | Number of Tested Insects | Percent Mortality (%) |
| 1 | 500 | 142 | 100 | 151 | 100 | 108 | 92.6 | 78 | 60.5 |
| 2 | " | 138 | 100 | 126 | 100 | 132 | 94.2 | 65 | 57.6 |
| 3 | " | 146 | 100 | 131 | 100 | 141 | 97.1 | 106 | 68.2 |
| 4 | " | 132 | 100 | 111 | 100 | 98 | 90.6 | 72 | 56.5 |
| 5 | " | 140 | 100 | 142 | 100 | 135 | 89.2 | 101 | 61.2 |
| 6 | " | 152 | 100 | 133 | 100 | 126 | 84.6 | 88 | 63.5 |
| 7 | " | 151 | 100 | 172 | 100 | 146 | 88.5 | 62 | 59.6 |
| 8 | " | 143 | 100 | 132 | 100 | 124 | 90.1 | 57 | 56.9 |
| 9 | " | 161 | 100 | 146 | 100 | 106 | 100 | 53 | 75.1 |
| Sumithion | 500 | 138 | 100 | 106 | 100 | 85 | 79.5 | 65 | 1.5 |
| Tokuthion | " | 64 | 100 | 86 | 84.5 | 64 | 9.2 | 52 | 6.3 |
| Diazinon | " | 149 | 100 | 141 | 100 | 90 | 58.9 | 54 | 13.8 |
| Control | — | 135 | 0 | 115 | 0 | 132 | 0 | 87 | 0 |

0009871

## TEST EXAMPLE 2

Insecticidal Effect on Rice Water Weevil

An emulsifiable concentrate prepared as described in Formulation Example 1 was adjusted to a predetermined concentration and the dilute water emulsion was sprayed on the 4th leaf stage rice seedlings planted in a flower pot using a glass nozzle. After air-drying, a cylindrical metal net 12 cm in diameter and 23 cm in height was set on the pot, and rice water weevil adults were put in the pot 1, 3 and 7 days after the application. After 48 hours from the day of putting the insects, percent mortality was assessed. The results obtained are shown in Table 4 below.

TABLE 4

| Tested Effective Component (Compound No.) | Concentration (ppm) | Days after Application | | | | | |
|---|---|---|---|---|---|---|---|
| | | 1 Day | | 3 Days | | 7 Days | |
| | | Number of Tested Insects | Percent Mortality (%) | Number of Tested Insects | Percent Mortality (%) | Number of Tested Insects | Percent Mortality (%) |
| 1 | 500 | 20 | 100 | 20 | 100 | 20 | 80 |
| 2 | " | " | 100 | " | 95 | " | 75 |
| 3 | " | " | 100 | " | 100 | " | 80 |
| 4 | " | " | 100 | " | 95 | " | 70 |
| 5 | " | " | 100 | " | 100 | " | 75 |
| 6 | " | " | 100 | " | 100 | " | 80 |
| 7 | " | " | 100 | " | 95 | " | 80 |
| 8 | " | " | 100 | " | 90 | " | 75 |
| 9 | " | " | 100 | " | 100 | " | 85 |
| C-1 | 500 | 20 | 6 | 20 | 40 | 20 | 20 |
| C-2 | " | " | 50 | " | 30 | " | 15 |
| C-3 | " | " | 45 | " | 40 | " | 20 |

(cont'd)

| Tested Effective Component (Compound No.) | Concentration (ppm) | Days after Application: 1 Day — Number of Tested Insects | 1 Day — Percent Mortality (%) | 3 Days — Number of Tested Insects | 3 Days — Percent Mortality (%) | 7 Days — Number of Tested Insects | 7 Days — Percent Mortality (%) |
|---|---|---|---|---|---|---|---|
| Rangard | 500 | 20 | 80 | 20 | 70 | 20 | 5 |
| Padan | " | " | 20 | " | 15 | " | 0 |
| Baycid | " | " | 95 | " | 80 | " | 15 |
| Control | -- | 20 | 0 | 20 | 0 | 20 | 0 |

TEST EXAMPLE 3

Preventive Effect on Tobacco Cutworm

An emulsifiable concentrate prepared as described in Formulation Example 1 was diluted with water to a concentration of 250 ppm and sprayed onto a cabbage plantlet in a flower pot using a spray-gun under a pressure of 4 $kg/cm^2$, followed by drying in air. The tests plants were infected with 4th-instar larvae of tobacco cutworm in the pot, and the pots were kept in a greenhouse. After 48 hours, percent mortality was assessed. The test was replicated four times for each compound using 40 insects in each test. The results obtained are shown in Table 5 below.

0009871

TABLE 5

| Tested Effective Component (Compound No.) | Concentration (ppm) | Percent Mortality (%) |
|---|---|---|
| 1 | 250 | 100 |
| 2 | " | 100 |
| 3 | " | 100 |
| 4 | " | 100 |
| 5 | " | 100 |
| 6 | " | 100 |
| 7 | " | 100 |
| 8 | " | 100 |
| 9 | " | 100 |
| C-1 | 250 | 5.4 |
| C-2 | " | 4.2 |
| C-3 | " | 5.4 |
| Control | -- | 0 |

TEST EXAMPLE 4

Insecticidal Effect on Diamond-Back Moth

A wettable powder prepared as described in Formulation Example 2 was diluted with water to a concentration of 100 ppm and leaves of a cabbage were dipped into the dilute water solution followed by drying in air, and charged in a 60 cc volume cup made of vinyl chloride resin. Twenty 3rd-instar

0009871

larvae of diamond-back moth were put in each cup, and the cups were kept at 25°C. After 48 hours, percent mortality was assessed and the test was replicated twice for each treatment. The results obtained are shown in Table 6 below.

TABLE 6

| Tested Effective Component (Compound No.) | Concentration (ppm) | Percent Mortality (%) |
|---|---|---|
| 1 | 100 | 100 |
| 2 | " | 100 |
| 3 | " | 100 |
| 4 | " | 100 |
| 5 | " | 100 |
| 6 | " | 100 |
| 7 | " | 100 |
| 8 | " | 100 |
| 9 | " | 100 |
| C-1 | 100 | 10.2 |
| C-2 | " | 9.8 |
| C-3 | " | 11.6 |
| Control | -- | 0 |

TEST EXAMPLE 5

Insecticidal Effect on Smaller Tea Tortrix

Leaves of an apple tree were dipped into a dilute water solution of a wettable powder prepared as described in Formulation Example 2. After drying in air, the leaves were charged in a cup of 6 cm in diameter made of vinyl chloride resin, and 10 4th-instar larvae of smaller tea tortrix which had successively reared on a Tamaki artificial diet were put in each cup. The cups were capped and kept at 25°C. After 72 hours, the number of the surviving insects and the dead insects were recorded to determine percent mortality. In each treatment, 3 cups and 30 insects were used in total. The results are shown in Table 7 below.

TABLE 7

| Tested Effective Component (Compound No.) | Percent Mortality 100 ppm | 50 ppm |
|---|---|---|
| 1 | 100 | 100 |
| 2 | 100 | 100 |
| 3 | 100 | 100 |
| 4 | 100 | 100 |
| 5 | 100 | 100 |
| 6 | 100 | 100 |
| 7 | 100 | 100 |
| 8 | 100 | 100 |
| 9 | 100 | 100 |
| C-1 | 20 | 6.7 |
| C-2 | 16.7 | 3.3 |
| C-3 | 13.3 | 6.7 |
| Tokuthion | 83.3 | 53.3 |
| Control | 0 | 0 |

TEST EXAMPLE 6

Insecticidal Effect on Apple Leaf Miner

A seedling of an apple tree planted in a bisque flower pot of 12 cm in diameter was placed in a cage in which adult apple leaf miners were breeding. After the insects were

allowed to oviposit on the foliar part of the seedling for 4 days, the pot was taken out from the cage, and a dilute water solution of a wettable powder prepared as described in Formulation Example 2 was sufficiently sprayed thereon. Thereafter the pots were placed in a greenhouse. Seven days after the spraying, bores made by larvae were broken and percent mortality was assessed for all the leaves of each seedling. Three pots were used for each treatment. The results obtained are shown in Table 8 below.

TABLE 8

| Tested Effective Component (Compound No.) | Number of Tested Insects | Percent Mortality (%) |
|---|---|---|
| 1 | 50 | 100 |
| 2 | 42 | 100 |
| 3 | 35 | 100 |
| 4 | 64 | 100 |
| 5 | 58 | 100 |
| 6 | 54 | 100 |
| 7 | 52 | 100 |
| 8 | 40 | 100 |
| 9 | 32 | 100 |
| Salithion | 40 | 100 |
| Tokuthion | 71 | 60.6 |
| Control | 39 | 0 |

## TEST EXAMPLE 7

Miticidal Effect on Citrus Red Mite

A wettable powder prepared as described in Formulation Example 2 and diluted to a predetermined concentration was sprayed on a seedling of a Chinese citron to which citrus red mites were parasitic using a spray-gun. After drying in air, seedlings were kept in a greenhouse, and the number of living insects was recorded on the 2nd, 7th, 14th, 21st and 28th day from the day of application to determine the preventive effects. The results are shown in Table 9 below. The preventive effect was assessed by the following formula:

$$\text{Preventive Effect} = \left(1 - \frac{\text{Number of Living Mites in Control before Application}}{\text{Number of Living Mites in Treated Sample before Application}} \times \frac{\text{Sum of Number of Living Mites in Treated Sample after Application}}{\text{Sum of Number of Living Mites in Control after Application}}\right) \times 100$$

TABLE 9

| Tested Effective Component (Compound No.) | Concentration (ppm) | Number of Mites before Application | Number of Living Mites after Application: 2nd Day | 7th Day | 14th Day | 21st Day | 28th Day | Preventive Effect (%) |
|---|---|---|---|---|---|---|---|---|
| 1 | 500 | 63 | 0 | 0 | 0 | 1 | 1 | 99.7 |
| | 100 | 60 | 0 | 0 | 0 | 1 | 6 | 98.9 |
| 2 | 500 | 55 | 0 | 0 | 3 | 8 | 14 | 95.6 |
| | 100 | 51 | 0 | 1 | 6 | 11 | 17 | 93.4 |
| 3 | 500 | 72 | 0 | 0 | 0 | 0 | 1 | 99.9 |
| | 100 | 66 | 0 | 0 | 0 | 2 | 4 | 99.1 |
| 4 | 500 | 70 | 0 | 0 | 1 | 3 | 6 | 98.6 |
| | 100 | 48 | 0 | 0 | 1 | 5 | 8 | 97.2 |
| 5 | 500 | 60 | 0 | 0 | 2 | 8 | 12 | 96.5 |
| | 100 | 65 | 0 | 1 | 5 | 11 | 19 | 94.7 |
| 6 | 500 | 49 | 0 | 0 | 3 | 12 | 23 | 92.5 |
| | 100 | 62 | 0 | 1 | 8 | 14 | 28 | 92.1 |
| 7 | 500 | 76 | 0 | 0 | 2 | 8 | 15 | 96.8 |
| | 100 | 67 | 0 | 0 | 6 | 13 | 21 | 94.2 |

(cont'd)

| Tested Effective Component (Compound No.) | Concentration (ppm) | Number of Mites before Application | Number of Living Mites after Application: 2nd Day | 7th Day | 14th Day | 21st Day | 28th Day | Preventive Effect (%) |
|---|---|---|---|---|---|---|---|---|
| 8 | 500 | 71 | 0 | 0 | 3 | 5 | 10 | 97.6 |
| | 100 | 56 | 0 | 0 | 4 | 8 | 14 | 95.5 |
| 9 | 500 | 44 | 0 | 0 | 0 | 1 | 3 | 99.1 |
| | 100 | 63 | 0 | 0 | 1 | 4 | 5 | 98.5 |
| Kelthane | 200 | 42 | 0 | 0 | 0 | 6 | 10 | 96.3 |
| Morestan | 500 | 61 | 0 | 0 | 1 | 4 | 8 | 98.0 |
| Control | -- | 58 | 64 | 156 | 192 | 102 | 87 | -- |

- 41 -

Using the same experimentation as above except the wettable powder prepared as described in Formulation Example 7 instead of the above-described wettable powder, the results shown in Table 9a below are obtained.

TABLE 9a

| Tested Effective Component (Compound No.) | Concentration (ppm) | Number of Mites before Application | Number of Living Mites after Application: 2nd Day | 7th Day | 14th Day | 21st Day | 28th Day | Preventive Effect (%) |
|---|---|---|---|---|---|---|---|---|
| 10 | 500 | 64 | 0 | 0 | 2 | 4 | 9 | 97.8 |
| 11 | 500 | 57 | 0 | 0 | 0 | 1 | 2 | 99.5 |
| 12 | " | 72 | 0 | 0 | 0 | 1 | 1 | 99.7 |
| 13 | " | 60 | 0 | 0 | 0 | 0 | 1 | 99.9 |
| 14 | " | 62 | 0 | 0 | 0 | 1 | 5 | 99.1 |
| 15 | " | 55 | 0 | 0 | 2 | 4 | 6 | 97.9 |
| 16 | " | 76 | 0 | 1 | 5 | 8 | 11 | 97.0 |
| 17 | " | 53 | 0 | 0 | 1 | 3 | 8 | 98.0 |
| 18 | " | 68 | 0 | 0 | 2 | 6 | 20 | 96.1 |
| 19 | " | 59 | 0 | 0 | 1 | 4 | 17 | 96.5 |
| 20 | " | 66 | 0 | 0 | 1 | 12 | 15 | 96.0 |
| 21 | " | 74 | 0 | 0 | 2 | 13 | 16 | 96.0 |
| 22 | " | 51 | 0 | 0 | 1 | 3 | 7 | 98.0 |
| 23 | " | 63 | 0 | 0 | 2 | 9 | 22 | 95.0 |

(cont'd)

| Tested Effective Component (Compound No.) | Concentration (ppm) | Number of Mites before Application | Number of Living Mites after Application | | | | | Preventive Effect (%) |
|---|---|---|---|---|---|---|---|---|
| | | | 2nd Day | 7th Day | 14th Day | 21st Day | 28th Day | |
| 24 | " | 72 | 0 | 0 | 2 | 15 | 18 | 95.4 |
| Kelthane | 500 | 43 | 0 | 0 | 0 | 4 | 6 | 97.8 |
| Morestan | 500 | 63 | 0 | 0 | 1 | 5 | 10 | 97.6 |
| Control | -- | 61 | 72 | 163 | 202 | 110 | 91 | -- |


- 44 -

## TEST EXAMPLE 8

Insecticidal Effect on Rice Stem Borer

(1) Insecticidal effect on 3rd-instar larvae

A wettable powder prepared as described in Formulation Example 7 was diluted with water to a predetermined concentration. Rice seedlings were dipped into the dilute solution and placed in a 60 mℓ volume cup made of vinyl chloride resin. Ten 3rd-instar larvae of rice stem borer were put in each cup. The cups were capped and kept at 25°C in an incubater. After 72 hours, percent mortality was assessed. The results obtained are shown in Table 10 below.

TABLE 10

| Tested Effective Component (Compound No.) | Concentration (ppm) | Number of Tested Insects | Percent Mortality (%) |
|---|---|---|---|
| 10 | 20 | 60 | 100 |
| 11 | " | " | 100 |
| 12 | " | " | 100 |
| 13 | " | " | 100 |
| | 10 | " | 100 |
| | 5 | " | 81.5 |
| | 2.5 | " | 55.3 |
| | 1.3 | " | 40.1 |
| 14 | 20 | " | 100 |
| 15 | " | " | 100 |
| 16 | " | " | 100 |

(cont'd)

| Tested Effective Component (Compound No.) | Concentration (ppm) | Number of Tested Insects | Percent Mortality (%) |
|---|---|---|---|
| 17 | 20 | 60 | 100 |
| 18 | " | " | 100 |
| 19 | " | " | 100 |
| 20 | " | " | 100 |
| 21 | " | " | 100 |
| 22 | " | " | 100 |
| 23 | " | " | 100 |
| 24 | " | " | 100 |
| C-1 | 20 | 60 | 35.8 |
| | 10 | " | 9.6 |
| C-4 | 20 | " | 38.6 |
| | 10 | " | 24.2 |
| C-5 | 20 | " | 24.6 |
| | 10 | " | 8.7 |
| C-6 | 20 | " | 33.1 |
| | 10 | " | 18.4 |
| C-7 | 20 | " | 28.7 |
| | 10 | " | 15.3 |
| C-8 | 20 | " | 14.2 |
| | 10 | " | 6.1 |

(cont'd)

| Tested Effective Component (Compound No.) | Concentration (ppm) | Number of Tested Insects | Percent Mortality (%) |
|---|---|---|---|
| Tokuthion | 5 | 60 | 60.0 |
| | 2.5 | " | 42.3 |
| | 1.3 | " | 31.5 |
| Control | -- | 60 | 0 |

(2) Preventive effect against rice stem borer

A wettable powder prepared as described in Formulation Example 7 was diluted with water to a predetermined concentration and the dilute water solution was sprayed on a rice plant of about 45 cm in height grown in a flower pot at a rate of 30 mℓ per pot. The pots were kept in a greenhouse, and incubated larvae of rice stem borer were put in each pot on the 2nd, 6th, 9th or 14th day from the application. After 4 days from the day of putting the larvae, the numbers of the surviving insects and the dead insects were recorded to determine percent mortality. The results obtained are shown in Table 11 below.

## TABLE 11

| Tested Effective Component (Compound No.) | Concentration (ppm) | Days after Application and Percent Mortality | | | | | | | |
|---|---|---|---|---|---|---|---|---|---|
| | | 2 Days | | 6 Days | | 9 Days | | 14 Days | |
| | | Number of Tested Insects | Percent Mortality (%) | Number of Tested Insects | Percent Mortality (%) | Number of Tested Insects | Percent Mortality (%) | Number of Tested Insects | Percent Mortality (%) |
| 10 | 500 | 136 | 100 | 150 | 100 | 101 | 92.4 | 60 | 58.7 |
| 11 | " | 144 | 100 | 128 | 100 | 133 | 91.6 | 75 | 61.4 |
| 12 | " | 148 | 100 | 134 | 100 | 141 | 93.5 | 92 | 68.4 |
| 13 | " | 133 | 100 | 110 | 100 | 122 | 99.5 | 102 | 88.2 |
| 14 | " | 141 | 100 | 138 | 100 | 130 | 90.6 | 100 | 61.6 |
| 15 | " | 163 | 100 | 126 | 100 | 98 | 88.8 | 73 | 63.7 |
| 16 | " | 155 | 100 | 133 | 100 | 126 | 91.2 | 88 | 59.8 |
| 17 | " | 152 | 100 | 172 | 100 | 146 | 86.5 | 57 | 58.7 |
| 18 | " | 148 | 100 | 142 | 100 | 147 | 84.2 | 72 | 62.4 |
| 19 | " | 115 | 100 | 132 | 100 | 106 | 86.5 | 86 | 63.6 |
| 20 | " | 124 | 100 | 114 | 100 | 156 | 90.2 | 62 | 58.7 |
| 21 | " | 144 | 100 | 142 | 100 | 124 | 89.0 | 89 | 59.0 |
| 22 | " | 160 | 100 | 135 | 100 | 122 | 91.6 | 95 | 63.4 |

(cont'd)

0009871

| Tested Effective Component (Compound No.) | Concentration (ppm) | Days after Application and Percent Mortality | | | | | | | |
|---|---|---|---|---|---|---|---|---|---|
| | | 2 Days | | 6 Days | | 9 Days | | 14 Days | |
| | | Number of Tested Insects | Percent Mortality (%) | Number of Tested Insects | Percent Mortality (%) | Number of Tested Insects | Percent Mortality (%) | Number of Tested Insects | Percent Mortality (%) |
| 23 | 500 | 154 | 100 | 184 | 100 | 136 | 88.6 | 111 | 66.6 |
| 24 | " | 140 | 100 | 129 | 100 | 115 | 90.5 | 85 | 64.5 |
| Sumithion | 500 | 139 | 100 | 146 | 100 | 98 | 64.0 | 62 | 1.1 |
| Tokuthion | " | 85 | 100 | 84 | 82.4 | 68 | 10.1 | 64 | 5.8 |
| Diazinon | " | 124 | 100 | 131 | 100 | 115 | 56.7 | 92 | 11.6 |
| Control | -- | 133 | 0 | 112 | 0 | 130 | 0 | 90 | 0 |

## TEST EXAMPLE 9

Test for Fungicidal Effect on Rice Blast

Onto 20 rice seedlings breed: (Aichiasahi) at four-leaf stage grown in a bisque pot of 9 cm in diameter, a 40% wettable powder (Formulation Example 7) diluted with water so as to contain the indicated effective component at a concentration of 500 ppm was sprayed at a rate of 30 mℓ per pot using a spray-gun under an atomizing pressure of 0.5 $kg/cm^2$ while rotating the pots on a turntable. After drying in air, a suspension of Piricularia oryzae (spores on lesions of leaves of a rice plant) obtained by continuous infection with Piricularia oryzae in a greenhouse) having such a concentration that a microscopic view thereof (15 × 10) contained 50 spores was innoculated to the plant by spraying at a rate of 3 mℓ per pot. The innoculated plant was allowed to stand in a glass moist chamber (saturation humidity 25°C) for 24 hours and then transferred into a moist chamber placed in a greenhouse to develop lesions while maintaining at a high temperature. Five days after the innoculation, the number of the lesions on 10 leaves was recorded to calculate a preventive value based on the following formula:

$$\text{Preventive Value} = \frac{\text{Number of Lesions in Untreated Sample} - \text{Number of Lesions in Treated Sample}}{\text{Number of Lesions in Untreated Sample}} \times 100$$

The number of lesions on 10 leaves in an untreated sample was 168.6. The results obtained are shown in Table 12 below.

TABLE 12

| Tested Effective Component (Compound No.) | Concentration (ppm) | Preventive Value (%) |
|---|---|---|
| 10 | 500 | 100 |
| 11 | " | 100 |
| 12 | " | 100 |
| 13 | " | 100 |
| 14 | " | 100 |
| 15 | " | 100 |
| 16 | " | 100 |
| 17 | " | 100 |
| 18 | " | 100 |
| 19 | " | 100 |
| 20 | " | 100 |
| 21 | " | 100 |
| 22 | " | 100 |
| 23 | " | 100 |
| 24 | " | 100 |
| C-1 | 500 | 24.8 |
| C-4 | " | 21.0 |
| C-5 | " | 12.5 |
| C-6 | " | 5.0 |
| C-7 | " | 11.6 |
| C-8 | " | 4.5 |

While the invention has been described in detail and with reference to specific embodiments thereof, it will be apparent to one skilled in the art that various changes and modifications can be made therein without departing from the spirit and scope thereof.

WHAT IS CLAIMED IS:

1. An organic phosphoric acid ester compound represented by the formula (I):

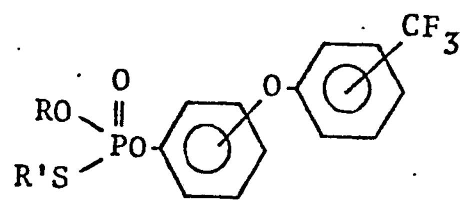

(I)

wherein R and R' are the same or different and each represents an alkyl group.

2. A compound according to Claim 1, wherein each alkyl group has 1 to 5 carbon atoms.

3. A compound according to Claim 2, wherein R and R' are different.

4. A compound according to Claim 3, wherein R represents an ethyl group and R' represents an n-propyl group or a sec-butyl group.

5. O-Ethyl-S-n-propyl-O-4-(4-trifluoromethylphenoxy)-phenyl phosphorothiolate.

6. O-Ethyl-S-sec-butyl-O-4-(4-trifluoromethylphenoxy)-phenyl phosphorothiolate.

7. O-Ethyl-S-n-propyl-O-3-(4-trifluoromethylphenoxy)-phenyl phosphorothiolate.

8. O-Ethyl-S-sec-butyl-O-3-(4-trifluoromethylphenoxy)-phenyl phosphorothiolate.

9. A process for preparing an organic phosphoric acid ester compound represented by the formula (I):

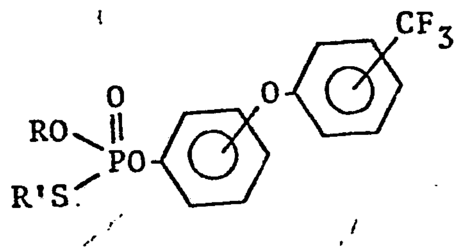

(I)

(wherein R and R' are the same or different and each represents an alkyl group), the process comprising reacting an O-alkyl-S-alkyl thiophosphoric chloride represented by the formula (II)

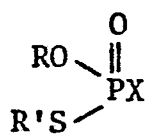

(II)

(wherein X represents a halogen atom and R and R' are as defined), with a trifluoromethylphenoxyphenol represented by the formula (III):

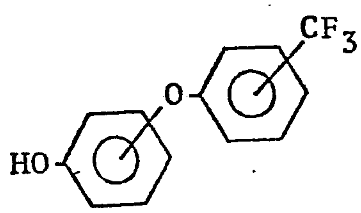

(III)

10. A process according to Claim 9, wherein the reaction is carried out in the presence of an acid acceptor.

11. A process according to Claim 10, wherein the acid acceptor is a tertiary amine.

12. A process according to Claim 10, wherein the acid acceptor is an inorganic base.

13. A process according to Claim 11, wherein the reaction is carried out at -10°C to 50°C.

14. A process according to Claim 12, wherein the reaction is carried out at -10° to 150°C.

15. A fungicidal, insecticidal or miticidal composition comprising as an active ingredient at least one organic phosphoric acid ester compound represented by the formula (I):

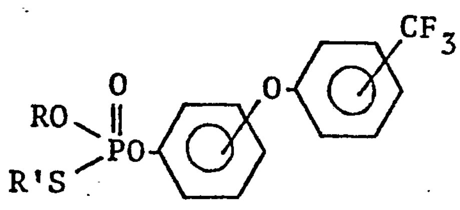

(I)

wherein R and R' are the same or different and each represents an alkyl group.

16. A process for controlling fungi and/or insects and/or mites which comprises applying to a substrate, eg an area or crop, a composition containing at least one organic phosphoric acid ester represented by the formula (I):

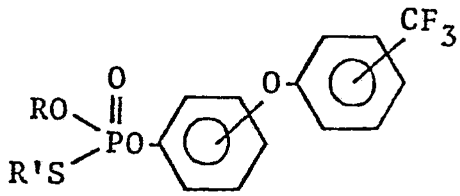

(I)

wherein R and R' are the same or different and each represents an alkyl group.

17. A process for controlling rice water weevils which comprises applying to a rice paddy a composition containing at least one organic phosphoric acid ester compound represented by the formula (I):

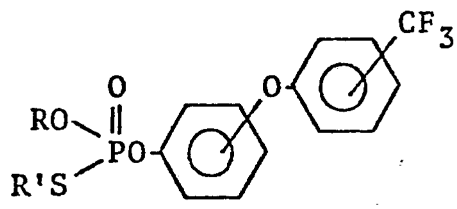

(I)

wherein R and R' are the same or different and each represents an alkyl group.

European Patent Office

# EUROPEAN SEARCH REPORT

0009871
Application number

EP 79 301 714.6

| Category | DOCUMENTS CONSIDERED TO BE RELEVANT — Citation of document with indication, where appropriate, of relevant passages | Relevant to claim | CLASSIFICATION OF THE APPLICATION (Int. Cl.3) |
|---|---|---|---|
| | DE - A1 - 2 527 308 (ROHM & HAAS) * claims 1 and 3 * | 1,15 | C 07 F 9/18<br>A 01 N 57/14 |
| | US - A - 3 927 149 (CIBA-GEIGY) *scheme 1a, page 1 * | 9 | |
| A | US - A - 3 819 755 (BAYER) | | |
| D | DE - A1 - 2 439 663 (CIBA-GEIGY) * claim 13 * | 9 | |
| D,A | US - A - 3 833 691 (CIBA-GEIGY) | | |

TECHNICAL FIELDS SEARCHED (Int.Cl.3)

A 01 N 57/14
C 07 F 9/165
C 07 F 9/18

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 18-12-1979 | KAPTEYN |

EPO Form 1503.1 06.78